# EUROPEAN PATENT APPLICATION

(11) **EP 4 489 319 A1**
(43) Date of publication of application: **08.01.2025**
(21) Application number: 23183133.0
(22) Date of filing: 03.07.2023
(51) Int. Cl.: H04B 3/46, H04L 5/00

(54) **DIGITAL TWIN OF PHYSICAL LAYER CARRIER DATA**

(71) Applicant: Nokia Solutions and Networks Oy, 02610 Espoo (FI)
(72) Inventor: DUPUIS, Nicolas, 4051 Chaudfontaine (BE); DIERICKX, Philippe, 1450 Saint-Gery (BE); VAN DAMME, Axel, 5101 Loyers (BE); DELABY, Olivier, 5101 Loyers (BE); DROOGHAAG, Benoit, 1421 Ophain-Bois-Seigneur-Isaac (BE)
(74) Representative: Seymour-Pierce, Alexandra Isobel

(57) **Abstract**

Disclosed herein is an apparatus for providing one or more performance characteristics of a physical layer for Discrete Multi-Tone, DMT, based communication. The apparatus comprises means for receiving one or more first inputs, each first input indicative of a parameter associated with the physical layer. The apparatus comprises means for receiving one or more second inputs, each second input indicative of a performance characteristic of the physical layer, to be output. The apparatus comprises means for selecting, based on the one or more second inputs, one or more processing modules of a digital twin of the physical layer carrier data. The apparatus comprises means for determining, using the selected one or more processing modules and the one or more first inputs, the one or more performance characteristics. The apparatus comprises means for providing the one or more performance characteristics as output. A method and computer program are also disclosed.

## Description

### Field

Example embodiments relate to an apparatus, method and computer program for providing one or more performance characteristics of a physical layer using a digital twin. As described herein, the digital twin is a digital twin of the physical layer carrier data for Discrete Multi-Tone (DMT) based communication technology. In some examples, the digital twin is used in the context of Digital Subscriber Line (DSL) services.

### Background

A simulator is a device, software program, or system that is designed to replicate the behaviour of a real-world system, process, or environment. Simulators are used in a wide range of fields, including aviation, engineering, healthcare, and entertainment, to train individuals, test designs, and improve performance. Simulators use mathematical models/algorithms to create a realistic representation of the system or process being simulated. By adjusting variables and inputs, simulators can test different scenarios and predict outcomes. In this way, a simulation replicates what could happen to a system or object. However, simulators are not perfect representations of reality. They are created to mimic the behaviour of a real-world system, process, or environment as closely as possible, but there are always limitations to the accuracy of the simulation, and there are always factors that are not captured in the simulation.

A digital twin by contrast is a virtual representation of a physical object, system, or process. It is a digital model that uses data and algorithms to simulate and predict the behaviour and performance of the physical object or entity. In this way, a digital twin copies real-world processes (within a digital environment) to digitally replicate or mirror what is actually happening to a specific physical object, system or entity in the real-world.

The concept of a digital twin has emerged as a way to improve efficiency, productivity, and quality in various industries. For example, in manufacturing a digital twin can simulate (or represent) the entire production process, from design to assembly, allowing engineers to optimize performance, predict maintenance needs, and reduce downtime. In addition to manufacturing, digital twins are used in fields such as healthcare, transportation, and construction. In healthcare, digital twins can be used to simulate and analyse the behaviour of organs or biological systems, helping doctors to develop personalized treatment plans. In transportation, digital twins can simulate traffic patterns, optimize routing, and improve safety.

Digital twins are considered an improvement over simulators in many ways, as they provide a more accurate representation of the physical system or process being modelled. Digital twins have the ability to simulate and predict the behaviour of the physical system under different conditions, allowing engineers and operators to optimize performance, identify potential problems, and make informed decisions. This improved predictive capability can help prevent downtime, reduce maintenance costs, and improve safety of the physical system/process. Another advantage of digital twins is their ability to incorporate the use of machine learning and other advanced analytics techniques. By analysing large amounts of data, digital twins can identify patterns and make predictions that would be difficult or impossible with traditional simulators. While simulators still have their place in many industries, the improved accuracy, predictive capability, and advanced analytics of digital twins are making them an increasingly important tool for optimizing performance, improving safety, and reducing costs of real-world physical objects, systems or entities.

In the context of telecommunication networks, there are significant benefits to having reliable digital representations of parts of the network within such a digital twin. However, it can be challenging to create such digital representations. Simulating the propagation of signals through the medium (using, for instance, electro-magnetic theory) is not enough, as the medium is only one part of the network; other network equipment mechanisms and behaviours also need to be taken into account in the digital twin which are not captured by electro-magnetic theory.

It is therefore desirable to provide a digital twin of a telecommunication network's physical layer (PHY-layer, or PHY) carrier data behaviours and mechanisms, to facilitate assessment and optimisation of the network configuration.

### Summary

The scope of protection sought for various embodiments of the invention is set out by the independent claims. The embodiments and features, if any, described in this specification that do not fall under the scope of the independent claims are to be interpreted as examples useful for understanding various embodiments of the invention.

According to a first aspect, this specification describes an apparatus for providing one or more performance characteristics of a physical layer for Discrete Multi-Tone, DMT, based communication, the apparatus comprising means for: receiving one or more first inputs, each first input indicative of a parameter associated with the physical layer; receiving one or more second inputs, each second input indicative of a performance characteristic, of the physical layer (or associated with the physical layer), to be output; selecting, based on the one or more second inputs, one or more processing modules of a digital twin of the physical layer carrier data; determining, using the selected one or more processing modules and the one or more first inputs, the one or more performance characteristics; and
providing the one or more performance characteristics as output.

According to a second aspect, this specification describes a method for providing one or more performance characteristics of a physical layer for Discrete Multi-Tone, DMT, based communication, the method comprising: receiving one or more first inputs, each first input indicative of a parameter associated with the physical layer; receiving one or more second inputs, each second input indicative of a performance characteristic, of the physical layer (or associated with the physical layer), to be output; selecting, based on the one or more second inputs, one or more processing modules of a digital twin of the physical layer carrier data; determining, using the selected one or more processing modules and the one or more first inputs, the one or more performance characteristics; and providing the one or more performance characteristics as output.

According to a third aspect, this specification describes a computer program comprising instructions for causing an apparatus to perform at least the following: receive one or more first inputs, each first input indicative of a parameter associated with the physical layer; receive one or more second inputs, each second input indicative of a performance characteristic, of the physical layer (or associated with the physical layer), to be output; select, based on the one or more second inputs, one or more processing modules of a digital twin of the physical layer carrier data; determine, using the selected one or more processing modules and the one or more first inputs, the one or more performance characteristics; and provide the one or more performance characteristics as output.

Example embodiments of the second and third aspects may also provide any feature of the first aspect.

According to a fourth aspect, this specification describes a computer-readable medium (such as a non-transitory computer-readable medium) comprising program instructions stored thereon for performing at least the following: receive one or more first inputs, each first input indicative of a parameter associated with the physical layer; receive one or more second inputs, each second input indicative of a performance characteristic, of the physical layer (or associated with the physical layer), to be output; select, based on the one or more second inputs, one or more processing modules of a digital twin of the physical layer carrier data; determine, using the selected one or more processing modules and the one or more first inputs, the one or more performance characteristics; and provide the one or more performance characteristics as output.

According to a fifth aspect, this specification describes an apparatus comprising: at least one processor; and at least one memory including computer program code which, when executed by the at least one processor, causes the apparatus to: receive one or more first inputs, each first input indicative of a parameter associated with the physical layer; receive one or more second inputs, each second input indicative of a performance characteristic, of the physical layer (or associated with the physical layer), to be output; select, based on the one or more second inputs, one or more processing modules of a digital twin of the physical layer carrier data; determine, using the selected one or more processing modules and the one or more first inputs, the one or more performance characteristics; and provide the one or more performance characteristics as output.

Optionally, the one or more processing modules of the digital twin comprise means for: simulating, based on the one or more first inputs, a medium channel frequency response for the physical layer; augmenting the medium channel frequency response with first noise; generating, based on the augmented medium channel frequency response, a first performance characteristic indicative of the frequency response of the physical layer.

In some examples, the medium channel frequency response is simulated using one or more cable models, and wherein the one or more cable models are selected based on the one or more first inputs.

In some examples the first noise is based on empirical data and/or the first noise comprises one or more algorithmic rules.

Optionally, the one or more processing modules of the digital twin further comprise means for: simulating, based on the medium channel frequency response, a noise sequence for the physical layer; augmenting the noise sequence with second noise; and generating, based on the augmented noise sequence, a second performance characteristic indicative of the noise on the physical layer.

In some examples, the noise sequence is simulated based on empirical rules.

In some examples, the second noise comprises one or more algorithmic rules. In some examples, the one or more algorithmic rules are based on empirical data.

Optionally, the one or more processing modules of the digital twin further comprise means for: generating, based on the augmented medium channel frequency response, a received power spectral density at a far side of the physical layer; and generating, based on the augmented noise sequence and the received power spectral density, a signal to noise ratio for the physical layer, wherein a third performance characteristic comprises the signal to noise ratio.

Optionally, the one or more processing modules of the digital twin further comprise means for: generating, based on the augmented medium channel frequency response, a transmit power spectral density; and augmenting the transmit power spectral density with third noise, wherein a fourth performance characteristic comprises the augmented transmit power spectral density.

In some examples, the third noise comprises one or more algorithmic rules, optionally where the one or more algorithmic rules are based on empirical data.

Optionally, the means for generating the received power spectral density comprises means for generating the received power spectral density based on the augmented transmit power spectral density. Optionally, the means for simulating the noise sequence for the physical layer comprises means for simulating the noise sequence for the physical layer based on the transmit power spectral density.

Optionally, the one or more processing modules of the digital twin further comprise means for generating, based on the signal to noise ratio and the one or more first inputs, a bitloading for the physical layer, wherein a fifth performance characteristic comprises the bitloading. Optionally, the one or more processing modules of the digital twin further comprise means for generating, based on the signal to noise ratio and the one or more inputs, a noise margin for the physical layer, wherein a sixth performance characteristic comprises the noise margin.

In some examples, the one or more first inputs comprise one or more of: target noise margin upstream, target noise margin downstream, maximum bitrate upstream, maximum bitrate downstream, or time-division duplexing ratio between uplink and downlink.

Also disclosed herein is a digital twin of a physical layer carrier data, the digital twin comprising one or more processing modules. The digital twin can be stored in memory of an apparatus and/or implemented by program instructions of a computer-readable medium.

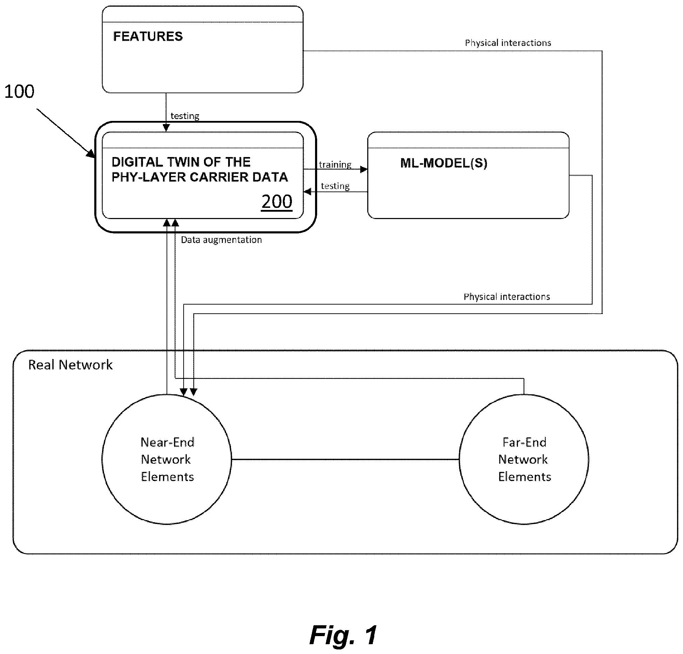

Also disclosed herein is a system claim comprising the apparatus of any aspect arranged in accordance with FIG. 1. The system can comprise one or more machine learning models in communication with the apparatus. The machine learning models can be configured to provide testing data as inputs to the apparatus. The outputs of the apparatus can be provided to the machine learning models as training data or other data inputs. The system can comprise one or more real networks in communication with the apparatus. The one or more real networks can be configured to provide augmentation data, which augmentation data can comprise or be used to generate the noise as described herein.

### Brief Description of Drawings

Example embodiments will now be described, by way of non-limiting example, with reference to the accompanying drawings, in which:
FIG. 1 is an example schematic diagram showing a system comprising an apparatus as described herein;
FIG. 2 is an example schematic diagram showing an apparatus as described herein;
FIG. 3 is an example schematic diagram showing the apparatus as described herein;
FIG. 4 is an example schematic diagram showing the apparatus as described herein;
FIG. 5 is a graph showing bitloading downstream for G.fast technology, generated using a digital twin as described herein;
FIG. 6 is graph showing an example transmission medium channel frequency, generated using the digital twin as described herein;
FIG. 7 is graph showing an example of dips in the transmission medium channel frequency;
FIG. 8A is a graph showing an example channel frequency response, and FIG. 8B is a graph showing the example channel frequency response of FIG. 8A as augmented with synthetic noise;
FIG. 9 is a graph showing an example channel frequency response augmented algorithmically with noise;
FIG. 10 is a graph showing an example, algorithmically created or simulated, noise sequence;
FIG. 11 is graph showing an example of the quiet line noise showing the effect of topological/cabling impairment;
FIG. 12 is graph showing an example of missing data in a real-world (measured) noise sequence;
FIG. 13 is an example flow diagram showing processing operations according to some examples of providing performance characteristics using a digital twin;
FIG. 14 is a schematic view of an apparatus which may be configured according to one or more example implementations of the process described herein;
FIG. 15 is a plan view of non-transitory media. and
FIG. 16 is a graph showing an example channel frequency response for power line communication (PLC).

In the description and drawings, like reference numerals refer to like elements throughout.

### Detailed Description

Example embodiments relate to an apparatus, method and computer program for providing one or more performance characteristics of a physical layer using a digital twin. The digital twin is a digital twin of the physical layer carrier data for Discrete Multi-Tone (DMT) based communication technology. In some particular examples described herein, the digital twin is used in the context of Digital Subscriber Line (DSL) services. However, the digital twin can be used in the context of any DMT based technology, including but not limited to power-line communication (or power-line carrier, PLC) and Data Over Cable Service Interface Specification (DOCSIS).

It has been recognised that electro-magnetic theory does not properly capture all of the unknown/unexpected phenomenon or conditions that occur in the real-world networks when different equipment, mechanisms or behaviour interact with one another. Therefore, a digital twin 200 of the physical layer (PHY-layer, also referred to herein as PHY) carrier data for DMT-based technology is proposed, which can replicate in a digital environment the behaviours of the carrier medium, the electro-magnetic environment and the behaviours of modems within the overall network when data/communications are sent over the network. This digital twin 200 can be used to determine one or more performance characteristics of the layer using an apparatus 100.

More particularly, as shown in FIG. 1, this digital twin 200 of the PHY carrier data provides a digital entity/representation which can be used to assess different network configurations or scenarios, test the physical interactions which would arise when changing certain network features (or configurations), and/or generate realistic data sets indicative of behaviours or output from the network (which data sets are suitable for training and/or testing machine learning models or other AI based features, as well as classical or empirical models). In addition to training and evaluating other models by way of such generated data sets and physical interactions, the digital twin offers the possibility to assess the behaviour of modems under given scenarios or configurations / parameters (e.g. for a given loop topology, under some specific noise environment, etc.) through the determination of one or more performance characteristics. The digital twin can also be used to find the optimal configuration for the network, either on an individual case specific basis or on average at a wider scale (e.g. a network scale). The digital twin described herein thus has utility across various applications, and can be used for multiple purposes, including but not limited to line troubleshooting, carrier data reconstruction, topology prediction, Single-Ended Line Troubleshooting, bandwidth prediction and self-provisioning, and QoS optimization.

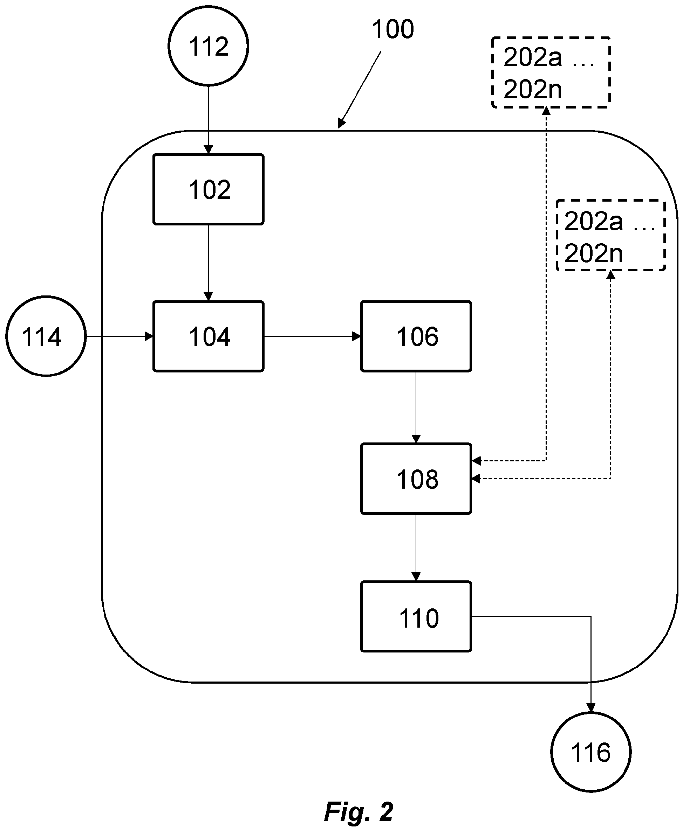

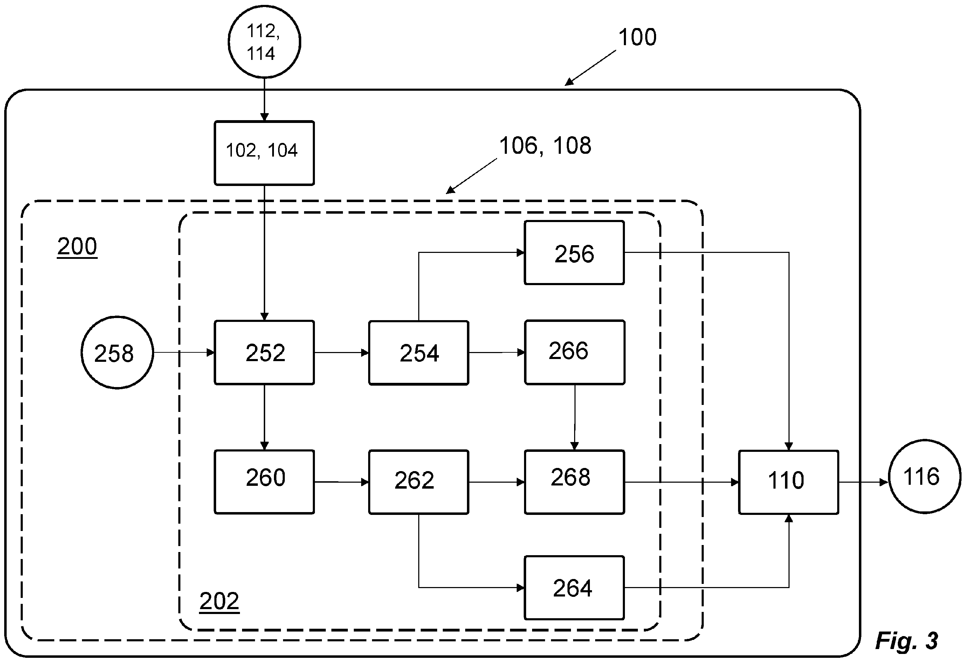

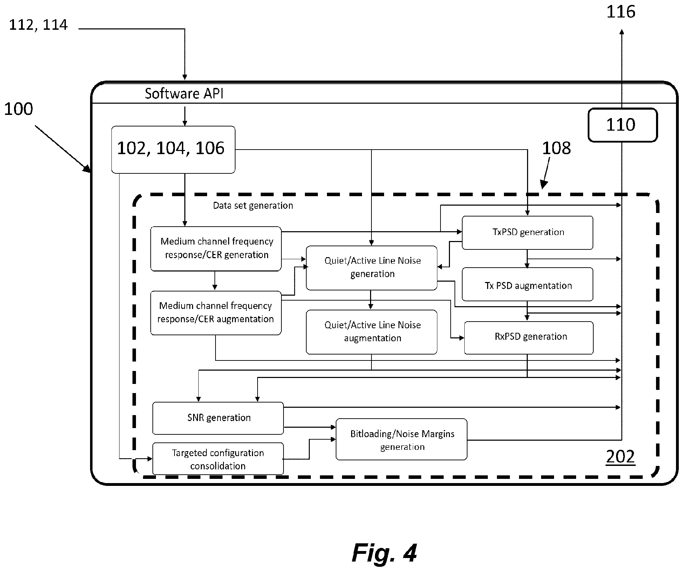

With reference to FIG. 2, apparatus 100 for providing one or more performance characteristics of a physical layer for Discrete Multi-Tone, DMT, based communication is described. The one or more performance characteristics are generated using the digital twin 200 of the physical layer carrier data; this digital twin 200 is discussed in more detail below with reference to FIGs. 3 and 4.

The apparatus 100 comprises means for receiving 102 one or more first inputs 112. Each first input is indicative of a parameter of the physical layer. By way of the digital twin 200, a single configuration can be addressed on demand, or multiple configurations could be envisaged (therefore simulating, in a realistic way, various configurations reflecting the characteristics of a given network). The first input(s) 112 define or indicate this configuration or set of configurations, and any other parameters associated with the physical layer and/or carrier data of the physical layer. For example, the parameters can include inputs such as carrier data, operational data, as well as the configuration of the physical layer.

The first input(s) 112 can comprise parameters associated with the physical layer. The parameters can comprise any suitable configuration parameters or inputs such as the technology or technologies to be addressed (DSL, PLC, DOCSIS, etc.), bandplan(s), carrier grouping selection, as well as data set size, line/network probabilities (e.g. loop length limitations, cable type), whether there is upstream or downstream power backoff (UPBO or DPBO), carrier data, operational data, etc. Any suitable parameters may be input to define the configuration of the physical layer to be represented by the digital twin and the carrier data. For example, a user or operator (such as a network service provider), can tailor the digital twin to the particularity of its network by providing the necessary parameters through the creation of first inputs 112 representing network specific data sets (e.g. with specific cable types, specific power spectral density or PSD, with patterns specific to underlying elements in such network, with network specific balance of the data set, etc.). The first input(s) 112 may additionally/alternatively comprise one or more of: target noise margin (TNM) upstream, target noise margin downstream, maximum bitrate upstream, maximum bitrate downstream, or time-division duplexing ratio between uplink and downlink.

The apparatus 100 also comprises means for receiving 104 one or more second inputs 114. Each second input is indicative of a performance characteristic, of the physical layer (or associated with the physical layer), to be output by the apparatus. Performance characteristics can include, for example, the frequency response of the physical layer, the line noise, the transmit and/or receive power spectral density, the signal to noise ratio (SNR), the bitloading, the noise margin, etc. In other words, the second inputs are indicative of the output desired from the digital twin 200.

The first and second inputs can be provided by one or more machine learning models (e.g. the inputs can be testing data for the ML models), by one or more users or operators, and/or by one or more other systems (for example, during an optimization process for the network). These first and second inputs indicate the configuration, or scenario, selection for the digital twin 200.

The apparatus 100 further comprises means for selecting 106, based on the one or more second inputs, one or more processing modules 202 (202a ... 202n) of the digital twin 200 of the physical layer carrier data; processing modules 202 are described below in more detail in FIGs. 3 and 4. In other words, different processing modules 202 may be selected depending on the desired performance characteristics, or output. For example, if only the channel frequency response of the PHY is required, processing modules for generating SNR may not be selected or used. By only selecting or using the required processing modules, processing time for determining the one or more performance characteristics may be reduced and/or the processing may be more efficient.

The means 102, 104, 106 may all be contained within, or performed by, a single processing module. For example, a dedicated input pre-processing and scenario selection module can be configured to receive the first and second inputs, process the inputs, and then provide an output to the required processing modules 202. By providing output only to the modules 202 of the digital twin required to produce the desired performance characteristics, these modules can be considered to be "selected".

The apparatus 100 further comprises means for determining 108, using the selected one or more processing modules and the one or more first inputs, the one or more performance characteristics. The one or more inputs 112 are used to set up or configure the digital twin 200 with the correct configuration / parameters in order to appropriately represent the desired network configuration and topology within (or by) the one or more processing modules 202 of the digital twin 200.

The apparatus further comprises means for providing 110 the one or more performance characteristics as output 116. The output 116 of the determined performance characteristic(s) can be one or more numerical values, a data set or curve, or any other suitable representation of the desired characteristic. The output can be provided to a user on a digital display or user interface, and/or can be provided as data to another system or apparatus. For example, as shown in FIG. 1 above, depending on the purpose, the digital twin 200 could be called with on-demand interaction - directly requesting the test of a specific scenario. Alternatively, for instance for machine learning model training purpose, there could be, under some constraints and with a generated balance/probabilities, a generation of a data set containing and covering millions of cases. These can all form part of inputs 112 to the apparatus 100, shown schematically in FIG. 1. This ability of generating a realistic like distribution of cases matching those of real networks is also part of the capabilities of the apparatus described herein. In other words, the output can be provided by way of any suitable communication means. The output 116 can be provided as input to one or more machine learning models (e.g. as training data), to a user or operator, and/or as input to one or more systems (for example, to one or more network optimization algorithms).

With reference to FIGs. 3 and 4, the different processing modules 202 of the digital twin are discussed in more detail. One or more computer programs or computer-readable medium containing computer readable instructions implementing the digital twin 200 may be provided. At least some functionality of the digital twin can be provided remote from the apparatus and accessed by /through the apparatus 100 (i.e. one or more of the processing module(s) 202a ... 202n of the digital twin can be remote from the apparatus), or all of the processing module(s) of the digital twin can be implemented as part of the apparatus 100 (i.e. on the same device, as in FIG. 1). These different exemplary arrangements are illustrated in FIG. 2, which shows the processing module(s) 202a ... 202n within dashed lines, indicating that different processing modules 202a ... 202n can optionally be located within the apparatus or remote from the apparatus. In some examples, processing modules 202 are distributed across the apparatus and a remote device, such as a server. As shown in the example of FIG. 4, when the digital twin is implemented as part of apparatus 100, the receiving means 102, 104 can be implemented as e.g. a software API or other interface providing access to the digital twin 200; first and second inputs 112, 114 are then received through the receiving blocks 102, 104 of the API, for example. Any suitable manner of implementation may be used.

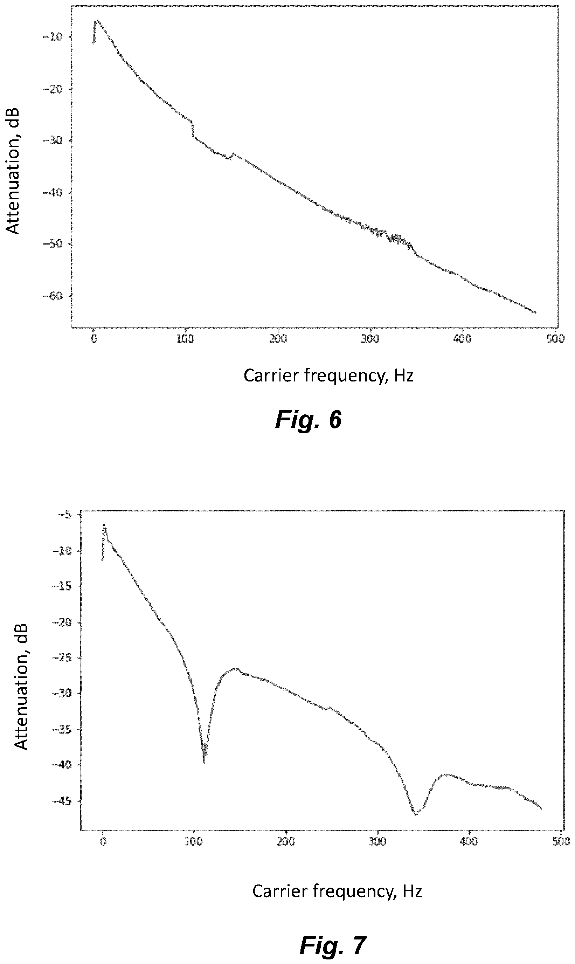

In some implementations, such as the example shown in FIG. 3, the one or more processing modules 202 of the digital twin comprise means for simulating 252, based on the one or more first inputs, a medium channel frequency response for the physical layer. The transmission medium channel frequency response, commonly expressed in dB (and called Hlog in the DSL context), is a key measurement performed by the modems. It reflects the attenuation of the medium the different frequency carrier. The medium channel frequency response can be simulated using one or more cable models 258. The one or more cable models 258 can be selected based on the one or more first inputs. For example, different cable models can be selected depending on the configuration of the PHY. This simulation of the channel frequency response is discussed below in more detail with reference to FIGs. 6 and 7.

The one or more processing modules can further comprise means for augmenting 254 the medium channel frequency response with first noise. Differences in the theoretical frequency response and that actual frequency response are caused or induced by the modem themselves, their hardware components and the way they measure or estimate signals. By nature, those behaviours are not reproducible by theory, and are vendor specific. As such, it is beneficial to leverage real-world data obtained from various networks/operators in order to augment (refine) the generated or simulated frequency response data with noise rules or data (e.g. first noise) to replicate the various distortions which arise in the real-world.

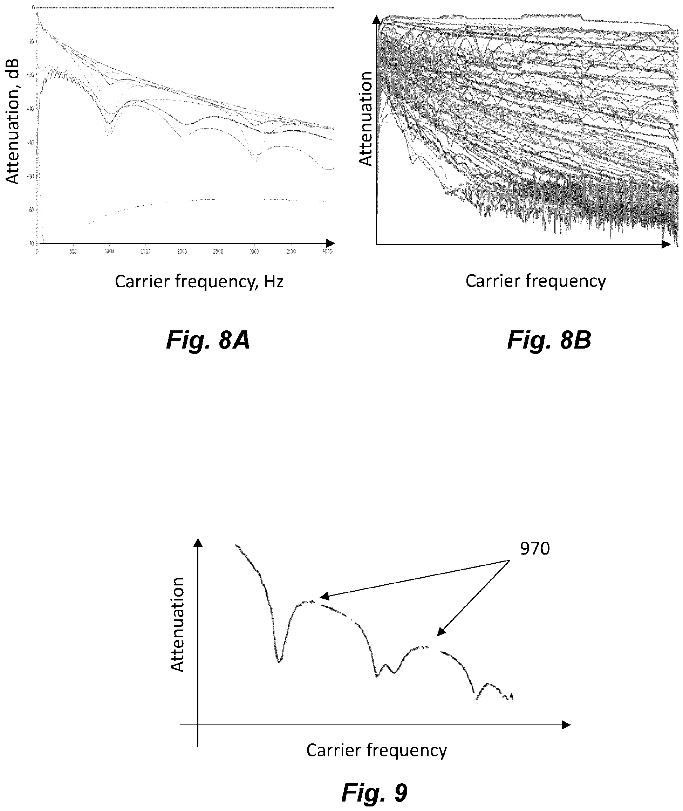

The first noise can be based on empirical data (i.e. measurements or sensor data). Additionally or alternatively, the first noise comprises one or more algorithmic rules. The first noise used to augment the simulated channel frequency response can be determined or generated from a real network, as shown in FIG. 1 (see e.g. data augmentation from the near-end and far-end network elements). Optionally, the augmentation can be based on real-time or substantially real-time data, or the augmentation can be based on previously measured or determined data. This augmentation of the simulated channel frequency response is discussed below in more detail with reference to FIGs. 8A, 8B and 9.

The processing modules can further comprise means for generating 256, based on the augmented medium channel frequency response, a first performance characteristic indicative of the frequency response of the physical layer. This first performance characteristic can be provided as output 116, or the output 116 can comprise data representative of the performance characteristic.

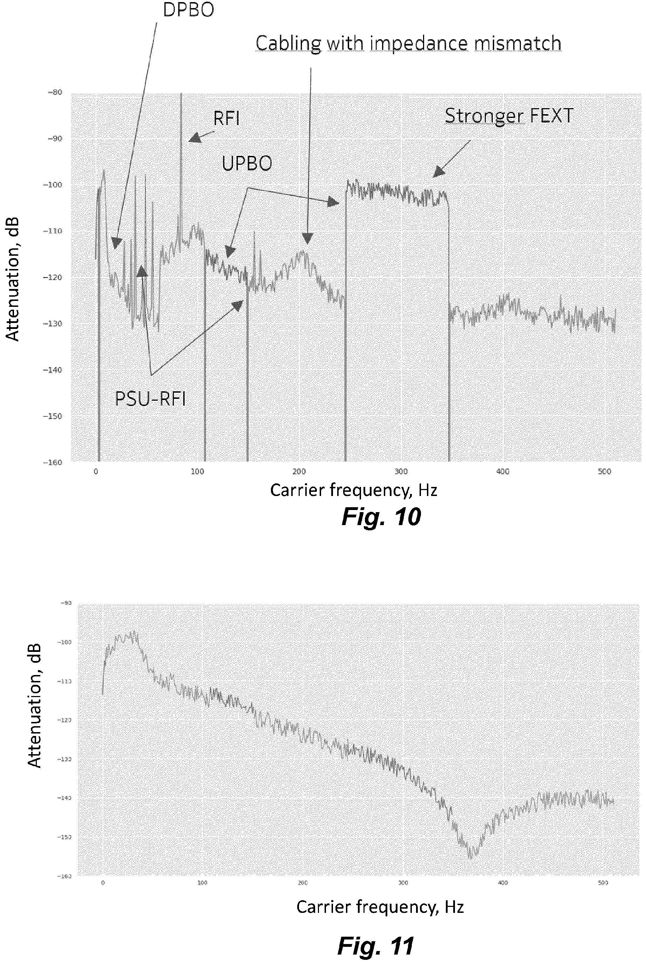

In some implementations, the one or more processing modules 202 of the digital twin comprise means for simulating 260, based on the medium channel frequency response, a noise sequence for the physical layer. The noise sequence complements the channel frequency response, producing a second, noise, signal through which to better represent the real-world system behaviours. The noise sequence is computed or simulated by leveraging the channel frequency response, but without modifying it. The noise sequence represents the quiet/active line noise sequences of the PHY. In some examples, the noise sequence is simulated algorithmically. In some examples, the noise sequence is based on empirical rules. In other words, the noise can be generated using algorithms/rules that have been constructed from empirical knowledge (field data, measurements, etc.). Electro-magnetic theory is by essence complex, and does not bridge the gap between microscopic concepts and the macroscopic behaviours which are measured in practice. Therefore, in order to generate relevant noise sequences applicable to each chosen medium/environmental conditions, an algorithmic approach can be used to generate quiet/active line noise sequences based on empirical rules and/or real-world data processing. This simulation of the noise sequence is discussed below in more detail with reference to FIGs. 10 and 11.

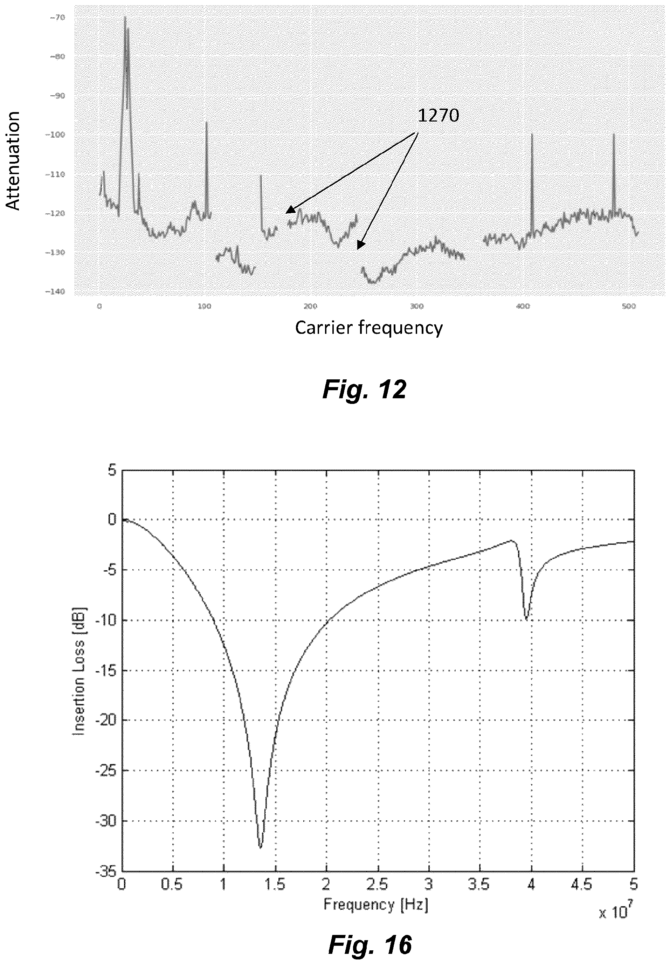

The one or more processing modules 202 of the digital twin further comprise means for augmenting 262 the noise sequence with second noise. The second noise can be thought of as rules derived from data. As for the medium channel frequency response, in a real-world situation there is missing data, outliers, etc. In order for the digital twin to be as close as possible to the reality, such data corruption patterns (second noise) are introduced into the simulated noise sequence. The second noise can be based on empirical data. Additionally or alternatively, the second noise comprises one or more algorithmic rules. Optionally, the augmentation can be based on real-time or substantially real-time data, or the augmentation can be based on previously measured or determined data. This augmentation of the noise sequence is discussed below in more detail with reference to FIG. 12.

The processing modules can further comprise means for generating 264, based on the augmented noise sequence, a second performance characteristic indicative of the noise on the physical layer generating 256. This second performance characteristic can be provided as output 116, or the output 116 can comprise data representative of the performance characteristic.

In some implementations, the one or more processing modules 202 of the digital twin comprise means for generating 266, based on the augmented medium channel frequency response, a received power spectral density at a far side (far end) of the physical layer. The received power spectral density (RxPSD) is the amount of power, at each frequency (tone), that the modem at the opposite side (far end) of the medium would be sensing prior to or during the communication. The RxPSD is another example of a performance characteristic which can be provided as output 116.

The processing modules can further comprise means for generating 268, based on the augmented noise sequence and the received power spectral density, a signal to noise ratio for the physical layer. A third performance characteristic comprises the signal to noise ratio. The signal to noise ratio can be provided as output 116. The signal-to-noise ratio (SNR) is the ratio, expressed in a logarithmic scale, between the received power spectral density and the quiet/active line noise (or augmented noise sequence). This metric (determined over the frequencies of the communication signal) is a central quantity estimated by modems in a real-world network.

In some implementations (not shown in FIG. 3), the one or more processing modules 202 of the digital twin comprise means for generating, based on the augmented medium channel frequency response, a transmit power spectral density. The transmit power spectral density (TxPSD) is a key part of communications, and represents how the signal power is spread over the various frequencies (tones) during the communication. Even if the TxPSD is specified for a particular type of network or communication, there are various mechanisms that affect it. For instance, Upstream or Downstream Power Backoff (UPBO or DPBO) can affect the TxPSD, depending on the loop/network topology. Also, the overall configuration may affect it by, for instance, limiting the maximum value that is permitted (E-M compatibility). These mechanisms have been digitally implemented - being coherent with the produced medium/noise characteristics - in order to get a power spectral density that is realistic and compatible with the input parameters. The TxPSD is another example of a performance characteristic which can be provided as output 116.

The one or more processing modules 202 further comprise means for augmenting the transmit power spectral density with third noise. A fourth performance characteristic comprises the augmented transmit power spectral density, and can be provided as output 116. As for the medium channel frequency response and the noise sequences, there will typically be some missing data or outliers in the real-world TxPSD data. In order for the digital twin to be as close as possible to the reality, such data corruption patterns (third noise) are introduced into the generated transmit power spectral density. The third noise can be based on empirical data. Additionally or alternatively, the third noise comprises one or more algorithmic rules. Optionally, the augmentation can be based on real-time or substantially real-time data, or the augmentation can be based on previously measured or determined data.

In some particular examples, the means for generating 266 the received power spectral density comprises means for generating the received power spectral density based on the augmented transmit power spectral density. Additionally or alternatively, in some particular examples the means for simulating 260 the noise sequence for the physical layer comprises means for simulating the noise sequence for the physical layer based on the transmit power spectral density.

In some examples (not shown in FIG. 3), the one or more processing modules 202 of the digital twin further comprise means for generating, based on the signal to noise ratio and the one or more first inputs, a bitloading for the physical layer. A fifth performance characteristic comprises the bitloading. The bitloading is the number of bits that may be filled by the modem in each stream during communication over the network. The bitloading mechanism is a function of the medium channel frequency response, the quiet/active noise measurement at each side (each stream), the technology or mechanisms being used (defined by the parameters of the first inputs 112) and other related configuration aspects (target noise margin or TNM, maxBitrate, etc.). In some particular examples, as a function of the SNR and taking all of these related configuration aspects (first inputs 112) into account, bits get filled by a waterfilling algorithm. Depending on the technology (e.g. G.fast), the time-division duplexing ratio between uplink and downlink (TDD ratio) may also be used in order to define the bandwidth in each stream. In this way, the digital twin 200 can represent the bandwidth behaviour according to predefined scenario/configurations or for a series of generated configurations.

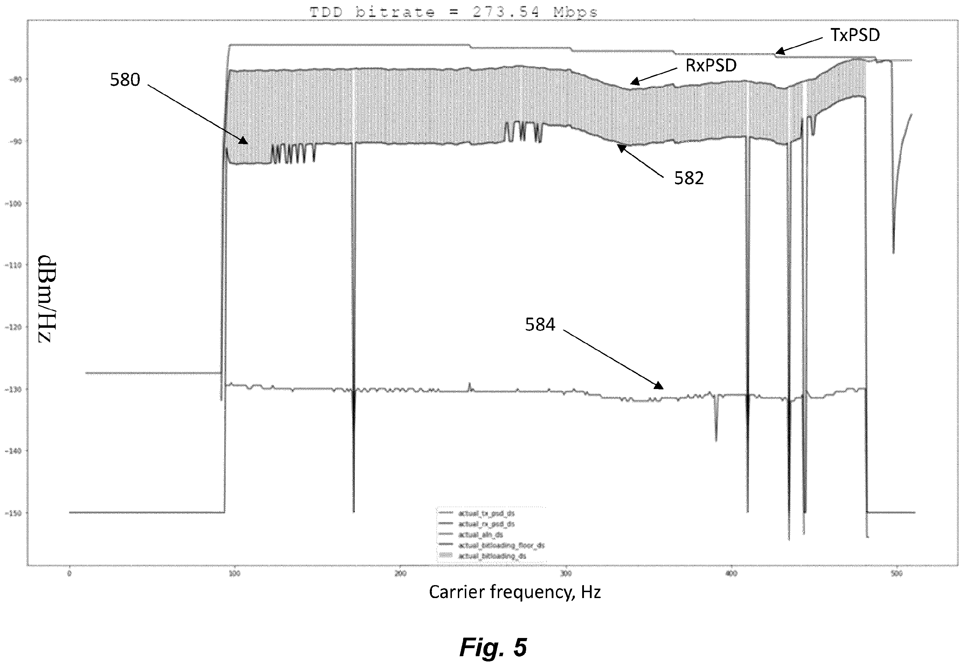

The bandwidth behaviour which can be output from digital twin 200 is illustrated in FIG. 5. In particular, FIG. 5 illustrates an example of the generated bitloading downstream (580) as a function of the technology (here G.fast), medium topology, impairment(s), noise condition/environment and configuration aspects (max bitrate, target noise margin, etc). All other carrier data and aggregated data (e.g. a data rate) have been generated by the digital twin 200 of the PHY-layer carrier data for DMT-based technology. In particular, the RxPSD, TxPSD and bitloading floor 582 are shown in FIG. 5. The SNR is the ratio of the TxPSD and the noise 584.

Additionally or alternatively, in some particular examples the processing modules 202 further comprise means for generating, based on the signal to noise ratio and the one or more inputs, a noise margin for the physical layer, wherein a sixth performance characteristic comprises the noise margin. The noise margin is the amount of noise the circuit or network can withstand. The noise margin is the difference between the actual SNR and the minimum SNR required for stable communication at a specific bitrate.

In order to be able to assess the bitloading and/or noise margins of various scenarios (so as to perform testing and/or to generate data with different configurations under similar line topology/noise conditions), it is important to be able to assess the effect of various targeted parameters. This can facilitate the conduction of various tests/evaluation, but also allows to check configuration use-cases in the digital world prior to deployment in the physical world (being one of the rational of the digital twin).

To this end, specific profile configuration parameters (Target Noise Margin US/DS, Max Bitrate US/DS, etc.) can be tunable, so that their respective effect on the produced data/curves can be tested or evaluated by generating output 116 across a variety of their values. In other words, the first input(s) 112 may additionally/alternatively comprise one or more tunable configuration parameters (i.e. parameters which can be tuned or adjusted so that their respective effect on the produced performance characteristics can be determined). As discussed above, such tunable first input(s) can include, but are not limited to, one or more of: target noise margin (TNM) upstream, target noise margin downstream, maximum bitrate upstream, maximum bitrate downstream, or time-division duplexing ratio between uplink and downlink. These parameters have a direct influence on the bitloading (bandwidth), but also on some QoS/robustness aspects of the technology with respect to physical noise effects (noise margin).

With reference to FIG. 4, the first and second inputs received at means 102, 104 can thus be processed by a "targeted configuration consolidation" module (which may form part of means 106 and/or means 108, as appropriate). The targeted configuration consolidation module can control tuning of any of the tunable configuration parameters, e.g. based on an input range or input data set, to generate output 116 across the selected input range/set. In this way, the effect of such tunable configuration parameters on the selected performance characteristics can be determined.

Any other suitable performance characteristics can be generated by way of the processing modules 202 of the digital twin 200 described herein, depending on the specific first inputs 112 (configurations / parameters) and second inputs 114 provided to the apparatus 100. The requested performance characteristics can be generated based on the selected processing modules of the digital twin and provided as output 116 in any suitable format.

With reference to FIG. 6, the generation of a transmission medium channel frequency response by means 252 is now discussed in more detail. FIG. 6 shows an example of a measured transmission medium channel frequency response, illustrating the attenuation of the medium (expressed in dB, called Hlog in the DSL context) for the different carrier frequencies (difference frequencies of the carrier waves, in Hertz). This frequency response curve is dependent on many network topological factors, such as the loop length, the wire gauge (line impedance), the insulation type, the connector properties, etc. The curve is also sensitive to the presence of any impairments or, in general, to the presence of any unexpected topological configurations. For instance, in the presence of a "double path", commonly called a "bridge tap" (in which there is a piece of cable connected to the main loop somewhere in the path), the frequency response curve will include one or more "dips", as shown in FIG. 7. The number of these dips, their shape, and their location depends on the characteristics of the bridge tap itself, such as the length of the bridge tap, the type of cable (gauge/insulator) of the bridge tap and its impedance.

The means for simulating 252 a medium channel frequency response for the physical layer is configured to generate this medium channel frequency response based on some input characteristics (one or more of which are inputs, parameters or configurations specified by the first inputs 112, and one or more of which can, in some examples, be chosen randomly). To this end, Multi-conductor Transmission Line theory and transfer matrices can be used. In short, starting with Maxwell's equations, transmission line equations are derived for a system comprising a number of conductors, and optionally other components (resistors, inductors, capacitors). This can be understood as giving a model of the cable system (a cable model). A transfer matrix is computed for every frequency of the carrier signal, where the ratio between the output and the input absolute voltage at each frequency defines the transfer function.

One or more impairments can also be added so as to provide the measured "dips", exemplified in the curve of FIG. 7. For example, a bridge-tap can be connected and its corresponding transfer matrix added to the path (or to multiple paths), so that the ratio between the global output and input voltage takes into account the bridge-tap element. In other examples, the effect of a resistive contact on one of the wires of the circuit can be modelled. By building up the features in this way, for every known channel-affecting impairment, the theoretical frequency response of a network topology can be modelled.

In specific examples, a DSL cable can be modelled using "simple" models, such as using a constant (k) to represent the Hlog in the equation Hlog(f) = k*sqrt(f). Such a cable model is valid to an extent - it matches reality only over a limited frequency range, and it does not capture the diversity and the exact characteristics of the different DSL cables deployed in the field. Another approach is to use the RLGC model, which would consist of measuring some electrical characteristics of the DSL cable (copper section and other characteristics of the dielectric used) to better represent a particular cable type. Using the RLGC model still has drawbacks, as such a model still only represents the channel frequency response over certain frequencies - for a digital twin, it is important to correctly match reality over the entire frequency range (for telecommunications, this is, typically up to G.Fast frequencies of 212MHz). Moreover, the RLGC model is not causal. For certain applications like single-ended loop testing (SELT), it is important that the model is causal so as to produce causal impulse responses. Parametric cable models like KHM or TNO may therefore be used instead of or as well as the simpler models, where each specific cable type might be represented by a few different parameters (in some examples, 5 parameters for KHM cable mode and up to 10 parameters for TNO cable model); these two specific cable models are causal and valid up to 212MHz.

Digital twin 200 can implement any suitable cable model 258, from simplistic to advanced (with the more advanced generally more accurate, or more closely aligned with reality). In some examples, the cable model 258 can be selected based on the first inputs 112. In some particular implementations, as mentioned above, one or more parameters of the model can be chosen or changed randomly; this can help to account for diversity or deviations within the manufacturing of a cable type (quality, tolerance, etc.). For example, parameter entries from a cable model database may be picked at random, and/or varied within the bounds of their stated standard deviations to introduce this variation or deviation.

In some examples, instead of or as well as the medium channel frequency response, the Multi-conductor Transmission Line theory and transfer matrix approach can be used to determine the Calibrated Echo Response (CER). CER is defined via the following formula: CER(f) = Vi(f)/Vpsd(f). In this formular, Vi(f) is the input voltage and Vpsd(f) is a voltage of the initial transmitted power spectral density. Determination of the CER(f) is at the core of any Single-Ended Line Testing methods, so including its calculation in the digital twin 200 allows to replicate in a digital world the echo-response according to realistic characteristics. The CER can be provided as one of the possible performance characteristics of output 116.

As discussed above, the processing modules 202 can comprise means for augmenting 254 the medium channel frequency response with first noise. The means 252 used to simulate the frequency channel response is a simulator that implements a theory (here electro-magnetic theory). It is an important building block, but it is not able to mimic the real-world frequency response in a digital manner. In order to come closer to realistic behaviour and empirical measurements, the frequency response is augmented with first noise by means 254. This can be done in a variety of ways, including by extracting patterns from real-world data and developing some algorithmic rules.

In order to capture distortion introduced by the line or network, families of deviations can be extracted from real-world data (using pattern extraction methods). These deviation patterns can be added to the generated frequency response curves to represent the distortion effects. FIG. 7 illustrates an example of this augmentation (with first noise), where a plurality of simulated channel frequency responses (FIG. 8A) are augmented with real-world pattern extraction to produce augmented frequency response curves (FIG. 8B). In this way, the first noise is based on empirical data.

One method that can be implemented algorithmically is the addition of quantification noise. Indeed, as the values of channel frequency response might be low and measured at the limit of the analog to digital converter capability, quantification noise might appear in reality. Those effects can be added to the generated curves. Additionally or alternatively, the presence of Radio Frequency Interferences (RFI) or Power Supply Interferences (PSU-RFI) during the estimation of the channel frequency response also, in some specific cases, adds some deviation for some frequencies/tones. Those patterns are present in FIG. 8B (where they are derived by pattern extraction). Another type of augmentation consists in adding various data corruptions. For example, either for "explainable" reasons, or more randomly, some attenuation values may be missing for some frequencies. When working with empirical field data, the probability of such missing data can be high and, therefore, this possibility can also be embedded into the augmentation means 254. FIG. 9 illustrates one such algorithmic implementation of the first noise, in which data is removed from the simulated curve to mimic this "missing data" 970 for certain frequencies. These augmentation approaches to add first noise are not directly "simulated"; instead, an algorithmic approach is followed, meaning that the noise effects have been crafted using some algorithmic rules, following some vector/matrix processing schemes or following some signals processing concepts. The rules or processing can be derived from, or based on, empirical data.

With reference to FIG. 10, the simulation of a noise sequence for the physical layer by means 260 is now discussed in more detail. In particular, an algorithmic approach to simulating or generating quiet/active line noise sequences is described, which approach is based on empirical rules and/or real-world data processing. In order to provide a reliable digital twin it is important that the noise sequences mimic reality but, also, that the sequence is valid and coherent with previously generated data. As such, where the line topology, technology configuration etc. have been defined or chosen via the first inputs 112 at the medium channel frequency response generation stage, those same inputs are applied or inherited in the quiet/active line noise sequence generation. As such, the outputs of the medium channel frequency response are provided as inputs to the Quiet/Active Line Noise generation, as well as some of the first inputs 112.

The means 260 is configured to algorithmically generate a noise sequence which is a consolidation of various, different, algorithmically generated noise sources. The noise sequence can be generated or simulated using empirical data, i.e. using rules or processes derive from analysing empirical data. In other words, an algorithmic approach is followed, meaning that the noise sequence is synthetically generated using some algorithmic rules.

The rules or processing can be derived from, or based on, empirical data. With particular reference to FIG. 10, the generated noise sequence can encompass one or more of the following noise sources: topological impairments (including e.g. impedance mismatch), Downstream/Upstream Power Backoff (DPBO/UPBO), Background/Thermal noise, Quantification noise, Crosstalk (FEXT/NEXT), Radio Frequency Interference (RFI), and Power-Supply Unit RFI (PSU-RFI). These difference sources of noise are discussed below in more detail.

High FEXT: Far-End Cross Talk (FEXT) is expressed in terms of the number of neighbouring links ("disturbers", variable nfext) that produce a significative increase of noise. The FEXT noise can be expressed as: FEXTloss = 10^{∗}log10(7.74e-21^{∗}nfexto.6^{∗}line_len^{∗}freq2) + Hlog. Hlog can be replaced with the frequency response in dB for non-DSL implementations or technologies. It is possible to generate examples of any kind of crosstalk impact.

Topological/cabling impairments, impairment location: As discussed above, a collection of topological impairments will be generated during the simulation of the medium channel frequency response. The model of quiet line noise (QLN) takes into account the channel frequency response of the loop, and the QLN is a function of this channel frequency response and the TxPSD (which is taken into account in the QLN according to various standards). Having a correct frequency response for each simulated impairment is therefore required to generate noise sequences arising from each of them. However, the location of some impairments (such as a bridge tap) affect the presence of noise and/or the severity of their contribution to the noise sequence. In order to reflect this variation, an intermediate (or temperate) frequency response can be used as input to the QLN. The intermediate response is intermediate between a frequency response with no impairment and a frequency response with an impairment. FIG. 11 shows such a QLN component due to topological/cabling impairment overlaid on a frequency response. The theoretical QLN component due to topological impairments is expressed as Q_theory = Tx_psd + FEXTloss, where the Hlog (or frequency response for non-DSL technologies) is replaced with the intermediate frequency response.

Upstream/Downstream Power Back Off (UPBO/DPBO): in the field, when different technologies coexist in a network, it is advised to make use of Power-Back Off (Upstream and/or Downstream). As would be understood by the skilled person, such techniques consist in applying a shaping, over the frequencies, to the transmitted power, in order to limit the impact of neighbouring lines' signals in the measured noise (QLN). As this ultimately affects the shape of the QLN, these mechanisms can also be simulated in order to get as close as possible to realistic noise sequences. Various types of UPBO/DPBO realizations can be generated, covering the different behaviours/effects of such mechanisms. These contributions are illustrated in FIG. 10.

RFIs: Radio Frequency Interference consists of isolated strong peaks visible in the noise sequence (see e.g. the example of FIG. 10). Such high values can be generated, using several degrees of freedom regarding the randomness of their presence, their intensity and their location in the sequence.

PSU-RFIs: Power Supply Units (PSU), which transform higher DC voltage into lower DC voltage and therefore require to cut the signal (pulse modulation) at a given frequency, produce specific electro-magnetic interferences. Such interferences are regularly spaced over the spectrum, generated at a fundamental frequency and at each of its harmonics (see e.g. the example of FIG. 10). Such power supply units are present in the modem themselves, or in various devices of the surrounding environment. Again, such repetitive peaks can be generated, using several degrees of freedom regarding the randomness of their fundamental frequency and harmonics, of their presence, intensity and their location in the sequence.

Strong background noise and quantification noise from ADC: in order to improve the mirroring of the real-world, noise effects from background noise as well as quantification noise, which is stronger at lower frequencies, can also be added.

Other configuration aspects: other configuration aspects specified by the first inputs 112 might have an impact on the noise sequences (QLN). For instance, a reduction of the maximum transmitted power reduces the noise in the network, hence lowering its impact. These different effects have also been implemented algorithmically.

As discussed above, the processing modules 202 can comprise means for augmenting 262 the noise sequence with second noise. Although the algorithmic nature of its generation allows the noise sequence to mirror empirical data, various data corruptions also exist in real-world data. For example, some attenuation values may be missing for some frequencies. Therefore, this possibility can also be embedded into the augmentation means 262. FIG. 12 illustrates one such algorithmic implementation of the second noise, in which data is removed from the simulated curve to mimic this "missing data" 1270 for certain frequencies. This augmentation is applied following an algorithmic approach, meaning that the noise effects have been crafted using various rules. The rules or processing can be derived from, or based on, empirical data.

Although the above is described with reference to examples of DSL, the approach described herein could be implemented with other digital communication mediums, such as Power Line Communication (PLC) and Cable/DOCSIS, which use DMT based technology. For instance, as both the medium channel frequency response and noise sequences are obtained in a similar manner for PLC, and as the PLC technology is DMT-based, there is a direct application of this digital twin for such technologies. In this regard, FIG. 16 illustrates an example of powerline channel PLC frequency response, which is impacted by the presence of a surge protection (see e.g. the "dips"). The approach disclosed herein therefore also applies by analogy to such DMT based technologies and mediums.

An advantage of building a digital twin 200 as described herein is that the characteristics of a network can be documented. As such, every generation of data (output 116) for every test and scenario (first and second inputs) can additionally comprise or be associated with metadata (properties) and labels.

For example, in the case of the generation of the medium (augmented) channel frequency response, the output 116 can be associated with or comprise all of the input and randomly chosen properties, ranging from cable characteristics, topology, presence of impairment(s), impact of impairment(s), valid values, mask of invalid values, CPE signature in-use, etc. This is an advantage compared to other data capture/set options, and allows to leverage the digital twin 200 to create realistic-like data for subsequent machine learning model training, as well as enabling the provision of data for supervised machine learning approaches.

As another example, in the case of the noise sequence, it is possible to quantify and label each noise source. The output 116 can thus be associated with or comprise data indicating the different noise contributions. Example labels include: quantification of the global bandwidth loss compared to a network-learned reference; quantification of each noise source in terms of bandwidth loss for the same line topology; and quantification of each noise source in terms of bandwidth loss for a repaired line topology. These different labels are discussed below in more detail.

In general, (Gaussian) noise sources are difficult to quantify as, by essence, a noise that is stronger than others (in some part of the spectrum) completely hides the other noise sources (i.e. the difference sources are no longer separable and/or quantifiable in that part of the spectrum). It is possible to derive by theory (from the channel frequency response, the TxPSD, etc.), the expected normal level and shape of the noise over the frequency spectrum (this is the reference noise). If the (computed/simulated) noise, as determined using the approaches described herein, is above this reference in some part of the spectrum, then it is possible to compute each dB/Hz that is lost. After summing all this dB/Hz over each frequency, there is a loss in dB, which loss is convertible to bits. This results in a label, or allows to label the bit loss as quantification of the global bandwidth loss compared to a network-learned reference.

This process can be repeated for each noise source, counting the loss that is higher than the reference and also above the other recognized noise sources. This is an example of a label of quantification of each noise source in terms of bandwidth loss for the same line topology. Finally, when repairing a line there is modification of the channel, and therefore of the channel frequency response; as such, there is another reference that can be computed and that represents the expected normal noise sequence that is expected under a repaired line condition (e.g. with the derived channel frequency response of a repaired loop). This can allow to label the quantification of each noise source in terms of bandwidth loss for a repaired line topology.

Furthermore, documenting the noise sources and/or labelling the output data facilitates one or more of the following computations to be performed with respect to the different noise contributions. These computations can be performed by apparatus 100 (i.e. they can be selected as a desired performance characteristic through the second input 114), or the computations can be performed by a user or another system based on the output 116 and associated metadata.

FEXT US/DS:
- Computation of the SNR loss (or bitrate loss) between an "ideal noise sequence" (e.g., the QLN expected for the same loop not affected by any topological impairments and without the presence of any impacting noise sources) and the FEXT component,
- Computation of the SNR loss (or bitrate loss) between an "ideal noise sequence at same cabling" (e.g., the QLN expected for the same loop still affected by its topological impairments but without the presence of any impacting noise sources) and the FEXT component,
- Computation of the SNR loss (or bitrate loss) for the excessive contribution of the FEXT component with respect to all the other symptoms, for the same loop not affected by any topological impairments.
- Computation of the SNR loss (or bitrate loss) for the excessive contribution of the FEXT component with respect to all the other symptoms, for the same loop still affected by its topological impairments.

High Background Noise US/DS:
- Computation of the SNR loss (or bitrate loss) between an "ideal noise sequence" (e.g., the QLN expected for the same loop not affected by any topological impairments and without the presence of any impacting noise sources) and the Background Noise component,
- Computation of the SNR loss (or bitrate loss) between an "ideal noise sequence at same cabling" (e.g., the QLN expected for the same loop still affected by its topological impairments but without the presence of any impacting noise sources) and the Background Noise component,
- Computation of the SNR loss (or bitrate loss) for the excessive contribution of the Background Noise component with respect to all the other symptoms, for the same loop not affected by any topological impairments.
- Computation of the SNR loss (or bitrate loss) for the excessive contribution of the Background Noise component with respect to all the other symptoms, for the same loop still affected by its topological impairments.

Radio Frequencies (RFI) US/DS:
- Computation of the SNR loss (or bitrate loss) between an "ideal noise sequence" (e.g., the QLN expected for the same loop not affected by any topological impairments and without the presence of any impacting noise sources) and the RFI component,
- Computation of the SNR loss (or bitrate loss) between an "ideal noise sequence at same cabling" (e.g., the QLN expected for the same loop still affected by its topological impairments but without the presence of any impacting noise sources) and the RFI component,
- Computation of the SNR loss (or bitrate loss) for the excessive contribution of the RFI component with respect to all the other symptoms, for the same loop not affected by any topological impairments.
- Computation of the SNR loss (or bitrate loss) for the excessive contribution of the RFI component with respect to all the other symptoms, for the same loop still affected by its topological impairments.

Power-Supply Units (PSU-RFI) US/DS:
- Computation of the SNR loss (or bitrate loss) between an "ideal noise sequence" (e.g., the QLN expected for the same loop not affected by any topological impairments and without the presence of any impacting noise sources) and the Power-Supply Unit component,
- Computation of the SNR loss (or bitrate loss) between an "ideal noise sequence at same cabling" (e.g., the QLN expected for the same loop still affected by its topological impairments but without the presence of any impacting noise sources) and the Power-Supply Unit component,
- Computation of the SNR loss (or bitrate loss) for the excessive contribution of the Power-Supply Unit component with respect to all the other symptoms, for the same loop not affected by any topological impairments.
- Computation of the SNR loss (or bitrate loss) for the excessive contribution of the Power-Supply Unit component with respect to all the other symptoms, for the same loop still affected by its topological impairments.

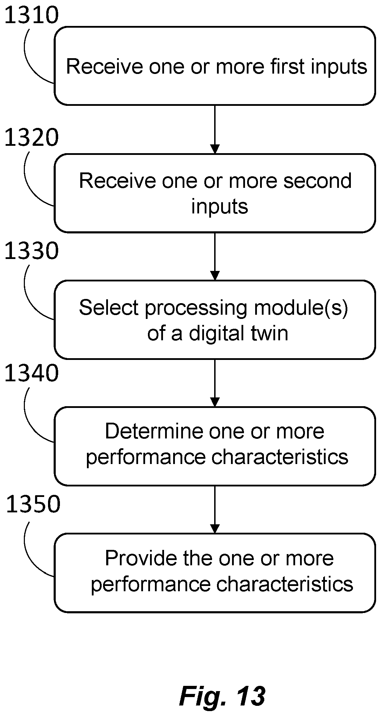

FIG. 13 is a flow diagram showing operations for providing one or more performance characteristics of a physical layer for Discrete Multi-Tone, DMT, based communication. The operations can be performed by apparatus 100, as discussed above.

A first operation 1310 may comprise receiving one or more first inputs. Each first input can be indicative of a parameter associated with the physical layer, including configuration parameters and parameters of the carrier data of the physical layer. A second operation 1320 may comprise receiving one or more second inputs. Each second input can be indicative of a performance characteristic, of the physical layer, to be output. A third operation 1330 may comprise selecting one or more processing modules of a digital twin. The one or more modules can be selected based on the one or more second inputs. The digital twin is a digital twin of the physical layer carrier data. A fourth operation 1340 may comprise determining one or more performance characteristics. The performance characteristic(s) are determined using the selected one or more processing modules and the one or more first inputs. A fifth operation 1350 may comprise providing the one or more performance characteristics as output.

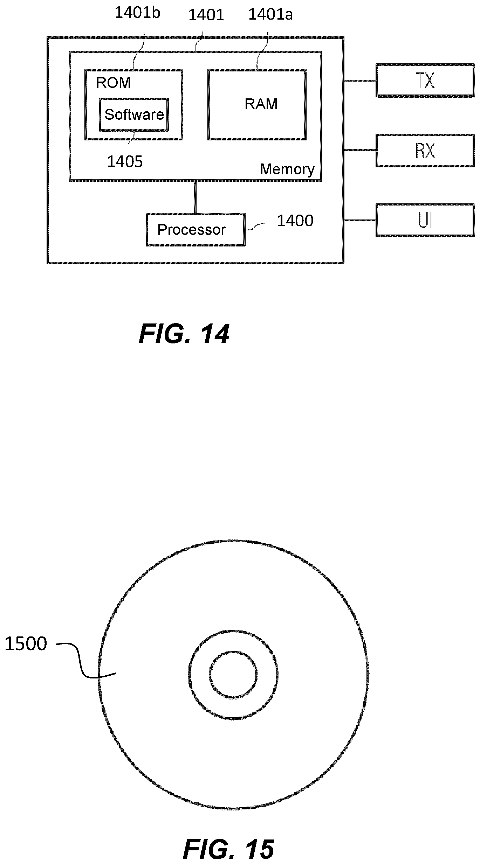

FIG. 14 shows an apparatus according to some example embodiments, which may comprise the apparatus 100 (and any means described in association with the apparatus). The apparatus may be configured to perform the operations described herein, for example operations described with reference to any disclosed process. The apparatus comprises at least one processor 1400 and at least one memory 1401 directly or closely connected to the processor. The memory 1401 includes at least one random access memory (RAM) 1401a and at least one read-only memory (ROM) 1401b. Computer program code (software) 1405 is stored in the ROM 1401b. The apparatus may be connected to a transmitter (TX) and a receiver (RX). The apparatus may, optionally, be connected with a user interface (UI) for instructing the apparatus and/or for outputting data. The at least one processor 1400, with the at least one memory 1401 and the computer program code 1405 are arranged to cause the apparatus to at least perform at least the method according to any preceding process, for example as disclosed in relation to the flow diagram of FIG. 13 and related features thereof. The at least one memory 1401 may also comprise the digital twin 200.

FIG. 15 shows a non-transitory media 1500 according to some embodiments. The non-transitory media 1500 is a computer readable storage medium. It may be e.g., a CD, a DVD, a USB stick, a blue ray disk, etc. The non-transitory media 1500 stores computer program code, causing an apparatus to perform the method of any preceding process for example as disclosed in relation to the flow diagrams and related features thereof. A memory may be volatile or non-volatile. It may be e.g., a RAM, a SRAM, a flash memory, a FPGA block ram, a DCD, a CD, a USB stick, and a blue ray disk.

If not otherwise stated or otherwise made clear from the context, the statement that two entities are different means that they perform different functions. It does not necessarily mean that they are based on different hardware. That is, each of the entities described in the present description may be based on a different hardware, or some or all of the entities may be based on the same hardware. It does not necessarily mean that they are based on different software. That is, each of the entities described in the present description may be based on different software, or some or all of the entities may be based on the same software. Each of the entities described in the present description may be embodied in the cloud.

Implementations of any of the above-described blocks, apparatuses, systems, techniques, or methods include, as non-limiting examples, implementations as hardware, software, firmware, special purpose circuits or logic, general purpose hardware or controller or other computing devices, or some combination thereof. Some embodiments may be implemented in the cloud.

It is to be understood that what is described above is what is presently considered the preferred embodiments. However, it should be noted that the description of the preferred embodiments is given by way of example only and that various modifications may be made without departing from the scope as defined by the appended claims.

## Claims

1. An apparatus (100) for providing one or more performance characteristics of a physical layer for Discrete Multi-Tone, DMT, based communication, the apparatus comprising means for:
receiving (102) one or more first inputs (112), each first input indicative of a parameter associated with the physical layer;
receiving (104) one or more second inputs (114), each second input indicative of a performance characteristic, of the physical layer, to be output;
selecting (106), based on the one or more second inputs, one or more processing modules (202) of a digital twin (200) of the physical layer carrier data;
determining (108), using the selected one or more processing modules and the one or more first inputs, the one or more performance characteristics; and
providing (110) the one or more performance characteristics as output (116).

2. The apparatus of claim 1, wherein the one or more processing modules of the digital twin comprise means for:
simulating (252), based on the one or more first inputs, a medium channel frequency response for the physical layer;
augmenting (254) the medium channel frequency response with first noise;
generating (256), based on the augmented medium channel frequency response, a first performance characteristic indicative of the frequency response of the physical layer.

3. The apparatus of claim 2, wherein the medium channel frequency response is simulated using one or more cable models (258), and wherein the one or more cable models are selected based on the one or more first inputs.

4. The apparatus of claim 2 or claim 3, wherein the first noise is based on empirical data and/or wherein the first noise comprises one or more algorithmic rules.

5. The apparatus of any of claims 2 to 4, wherein the one or more processing modules of the digital twin further comprise means for:
simulating (260), based on the medium channel frequency response, a noise sequence for the physical layer;
augmenting (262) the noise sequence with second noise; and
generating (264), based on the augmented noise sequence, a second performance characteristic indicative of the noise on the physical layer.

6. The apparatus of claim 5, wherein the noise sequence is simulated based on empirical rules.

7. The apparatus of claim 5 or claim 6, wherein the second noise comprises one or more algorithmic rules, optionally where the one or more algorithmic rules are based on empirical data.

8. The apparatus of any of claims 5 to 7, wherein the one or more processing modules of the digital twin further comprise means for:
generating (266), based on the augmented medium channel frequency response, a received power spectral density at a far side of the physical layer; and
generating (268), based on the augmented noise sequence and the received power spectral density, a signal to noise ratio for the physical layer,
wherein a third performance characteristic comprises the signal to noise ratio.

9. The apparatus of claim 8, wherein the one or more processing modules of the digital twin further comprise means for:
generating, based on the augmented medium channel frequency response, a transmit power spectral density; and
augmenting the transmit power spectral density with third noise, wherein a fourth performance characteristic comprises the augmented transmit power spectral density.

10. The apparatus of claim 8, wherein the third noise comprises one or more algorithmic rules, optionally where the one or more algorithmic rules are based on empirical data.

11. The apparatus of claim 9 or claim 10, wherein:
the means for generating (266) the received power spectral density comprises means for generating the received power spectral density based on the augmented transmit power spectral density; and/or
the means for simulating (260) the noise sequence for the physical layer comprises means for simulating the noise sequence for the physical layer based on the transmit power spectral density.

12. The apparatus of any of claims 8 to 11, wherein the one or more processing modules of the digital twin further comprise means for:
generating, based on the signal to noise ratio and the one or more first inputs, a bitloading for the physical layer, wherein a fifth performance characteristic comprises the bitloading; and/or
generating, based on the signal to noise ratio and the one or more inputs, a noise margin for the physical layer, wherein a sixth performance characteristic comprises the noise margin.

13. The apparatus of any preceding claim, wherein the one or more first inputs comprise one or more of: target noise margin upstream, target noise margin downstream, maximum bitrate upstream, maximum bitrate downstream, or time-division duplexing ratio between uplink and downlink.

14. A method for providing one or more performance characteristics of a physical layer for Discrete Multi-Tone, DMT, based communication, the method comprising:
receiving (1310) one or more first inputs (112), each first input indicative of a parameter associated with the physical layer;
receiving (1320) one or more second inputs (114), each second input indicative of a performance characteristic, of the physical layer, to be output;
selecting (1330), based on the one or more second inputs, one or more processing modules of a digital twin (200) of the physical layer carrier data;
determining (1340), using the selected one or more processing modules and the one or more first inputs, the one or more performance characteristics; and
providing (1350) the one or more performance characteristics as output (116).

15. A computer program comprising instructions for causing an apparatus to:
receive one or more first inputs (112), each first input indicative of a parameter associated with the physical layer;
receive one or more second inputs (114), each second input indicative of a performance characteristic, of the physical layer, to be output;
select, based on the one or more second inputs, one or more processing modules of a digital twin (200) of the physical layer carrier data;
determine, using the selected one or more processing modules and the one or more first inputs, the one or more performance characteristics; and
provide the one or more performance characteristics as output (116).
